# FASCICULE DE BREVET EUROPEEN

(11) **EP 0 587 503 B1**
(45) Date de publication et mention de la délivrance du brevet: **02.05.1997**
(21) Numéro de dépôt: 93402198.1
(22) Date de dépôt: 09.09.1993
(51) Int. Cl.: H01M 4/38

(54) **Matériau hydrurable pour électrode négative d'accumulateur nickel-hydrure**
Wasserstoffaufnehmender Werkstoff für negative Elektrode von Nickel-Hydrid Batterie
Hydridable material for a nickel-hydride battery negative electrode

(30) Priorité: 11.09.1992 FR 9210858
(43) Date de publication de la demande: 16.03.1994
(73) Titulaire: SAFT, F-93230 Romainville (FR)
(72) Inventeur: Bouet, Jacques, F-75015 Paris (FR); Knosp, Bernard, F-92200 Neuilly sur Seine (FR); Percheron-Guegan, Annick, F-92195 Meudon Cedex (FR); Canet, Olivier, F-92195 Meudon Cedex (FR)
(74) Mandataire: Bourely, Paul

(56) Documents cités:
- EP-A- 0 251 384
- EP-A- 0 293 660
- EP-A- 0 375 836
- WO-A-91/08167

## Description

Cette invention concerne un matériau hydrurable pour électrode négative d'accumulateur nickel-hydrure et son procédé de préparation.

Pour certains secteurs d'application, les accumulateurs nickel-cadmium sont en voie d'être remplacés par des accumulateurs nickel-hydrure. Les accumulateurs nickel-hydrure étanches sont des accumulateurs alcalins à électrolyte aqueux; le réactif constitué par l'hydrogène est stocké dans la masse de l'alliage hydrurable qui a la faculté de pouvoir en absorber de grandes quantités. Cet alliage doit pouvoir emmagasiner et restituer l'hydrogène, selon que l'accumulateur est en charge ou en décharge, avec une vitesse suffisante dans les conditions normales de fonctionnement. Il doit également avoir une capacité électrochimique plus élevée que le cadmium, résister à la corrosion dans la potasse, et ne pas être toxique.

A l'heure actuelle, on utilise principalement des alliages hydrurables de type AB₅, dérivant de LaNi₅, à cause de leur bonne stabilité chimique. Déjà industrialisés, ces matériaux ont une capacité massique pratique de l'ordre de 300mAh/g (et théorique de 350mAh/g), permettant d'atteindre en élément spiralé étanche une énergie massique de 55Wh/Kg, et une énergie volumique de 175Wh/l. Actuellement, ils ont atteint un stade de maturité rendant difficile un accroissement supplémentaire de leurs performances électrochimiques.

Il existe d'autres classes de matériaux hydrurables comme les alliages de type AB dérivant par exemple des systèmes TiV, TiFe, TiCr, TiCo, TiNi, etc...; mais ces alliages ne sont pas utilisés à cause de leur moindre résistance à la corrosion ou de l'évolution de leur structure cristalline au cours du cyclage.

Par ailleurs, de nombreux travaux ont été effectués sur des composés intermétalliques de type AB₂ appelés "phases de Laves". Ces phases se classent suivant trois structures cristallines: cubique C15 (type MgCu₂), hexagonale C14 (MgZn₂), et hexagonale C36 (MgNi₂), cette dernière symétrie étant peu courante.

Comme exemple de phases de Laves de type C14 on peut citer les composés dérivés de TiMnₓ, HfMnₓ, ZrMnₓ, avec x compris entre 1,5 et 2 (Z.Metallkd, 79(1), 1988, 24-31). Mais ces phases peuvent également être obtenues à partir des systèmes ZrCr₂, ZrV₂, etc... Mais l'industrialisation de ces matériaux présente des difficultés liées aux problèmes d'oxydabilité aigüe à l'air, de corrosion dans l'électrolyte, et de passivation lors de leur utilisation en électrode.

Les besoins sans cesse croissants du marché imposent une augmentation de l'énergie volumique des accumulateurs; pour certaines applications, par exemple les outils portables, un accroissement de l'énergie massique est également nécessaire.

La présente invention a pour but d'augmenter la capacité volumique et massique de l'accumulateur nickel-hydrure, en proposant une classe d'alliages hydrurables, pour la réalisation de l'électrode négative, présentant une capacité et des propriétés physico-chimiques améliorées par rapport à celles des matériaux connus jusqu'à présent.

L'objet de la présente invention est un matériau hydrurable pour électrode négative d'accumulateur nickel-hydrure composé majoritairement d'une phase de Laves de type hexagonal C14 (MgZn₂), caractérisé par la formule générale:

(Zr₁₋ₐ Aₐ) (Ni_{1-(b+c+d+e)} Mn_{b} Al _{c} Co_{d} Mₑ )ₜ

avec

| | |
|---|---|
| 1,9 ≤ t ≤ 2,1 | 0 < b ≤ 0,6 |
| 0 ≤ a ≤ 0,3 | 0 < c ≤ 0,4 |
| b+c+d+e ≤ 0,8 | 0 < d ≤ 0,4 |
| | 0 ≤ e ≤ 0,6 |

où A représente au moins un élément parmi Ti, Y, Ce, Ca, Mg, et M est choisi parmi Cr et Si. De préférence, A est Y ou Ce.

Il est souhaitable que la phase de Laves représente au moins 80% de l'alliage. Le zirconium confère à l'alliage sa capacité électrochimique et solide-gaz, et le nickel a pour rôle de permettre à l'alliage de résister à la corrosion. Les substituants choisis ont de préférence un rayon atomique proche de celui du métal d'accueil afin de limiter la déformation de la structure.

De préférence, dans ladite formule générale dudit matériau hydrurable 0,4 ≤ b ≤ 0,6. L'introduction du manganèse augmente la capacité spécifique initiale en décharge.

De préférence, dans ladite formule générale dudit matériau hydrurable 0 < c ≤ 0,2. L'aluminium ne forme pas d'hydrure mais permet de stabiliser celui qui est formé avec les autres composants. De plus il abaisse la valeur du plateau de pression lorsque sa teneur augmente.

De préférence, dans ladite formule générale dudit matériau hydrurable 0 < d ≤ 0,2. La résistance de l'alliage à la corrosion par l'électrolyte est améliorée par la présence de cobalt.

Selon une variante, dans ladite formule générale dudit matériau hydrurable 0,4 ≤ e ≤ 0,6.

De préférence, dans ladite formule générale, 0,5 ≤ b+c+d+e ≤ 0,8.

De préférence, si A représente Y dans ladite formule générale, 0,01 ≤ a ≤ 0,15; si A représente Ce dans ladite formule générale, 0,01 ≤ a ≤ 0,15; si A représente Ca dans ladite formule générale, 0,01 ≤ a ≤ 0,06; si A représente Mg dans ladite formule générale, 0,01 ≤ a ≤ 0,10. Ces substituants ont pour rôle de stabiliser l'hydrure

De préférence, dans ladite formule générale, c+d+e < 0,3, et de préférence encore, dans ladite formule générale, b+c+e < 0,7.

L'alliage métallique s'obtient par co-fusion des éléments. Pour obtenir un alliage homogène et de structure cristalline donnée, il est nécessaire d'effectuer plusieurs fusions.

Ledit matériau hydrurable est utilisé pour la réalisation d'une électrode négative d'accumulateur nickelhydrure à partir d'un mélange composé dudit matériau hydrurable en poudre, de 0,1 à 10% d'une poudre conductrice, telle que du carbone qui peut être palladié ou platiné,et de 0,05 à 5% de liant organique tel que du PTFE, fixé sur un support conducteur.

Une électrode selon la présente invention a notamment comme avantages que sa décharge démarre sans délai, et qu'elle résiste à l'inversion.

D'autres caractéristiques et avantages de la présente invention apparaitront à la lecture des exemples suivants de modes de réalisation, et dans le dessin annexé, donnés à titre illustratif mais nullement limitatif.

Dans le dessin annexé:
- la figure 1 représente la courbe de décharge d'une électrode de l'art antérieur comportant l'alliage Zr ( Ni_{0,4} Cr_{0,6} )₂;
- la figure 2 représente la courbe de décharge d'une électrode comportant l'alliage selon l'invention Zr_{0,7} Ti_{0,3} ( Ni_{0,4} Mn_{0,4} Al_{0,125} Co_{0,075} )₂;
- la figure 3 représente la capacité déchargée au cours du cyclage d'une électrode comportant l'alliage Zr_{0,7} Ti_{0,3} ( Ni_{0,4} Mn_{0,4} Al_{0,125} Co_{0,075} )₂;

### EXEMPLE 1 Art antérieur: alliage Zr ( Ni_{0,4} Cr_{0,6} )₂

Un alliage de composition Zr ( Ni_{0,4} Cr_{0,6} )₂ est réalisé de la manière suivante:
- un mélange est réalisé à partir des métaux constitutifs de grande pureté (99,9% à 99,999%);
- ce mélange est homogénéisé par plusieurs fusions successives dans un four à induction équipé d'un creuset en cuivre refroidi par eau sous pression partielle d'argon;
- après la dernière fusion, l'alliage a subi un recuit sous vide de 4 heures à 1200°C;
- l'alliage ainsi obtenu a été réduit en poudre par broyage mécanique effectué sous argon.

Une analyse radio cristallographique montre que cet alliage est constitué principalement d'une phase de Laves hexagonale C14 de type MgZn₂ de paramètres a=5,0286Å et c=8,2327Å.

Une électrode est réalisée qui se compose de 90% d'alliage hydrurable en poudre (⌀<36µm), de 5% d'une poudre conductrice de carbone, et de 5% de liant organique à base de PTFE, supportée par un collecteur de courant en déployé de nickel.

Pour l'évaluation électrochimique de cette électrode, l'électrolyte est de la potasse KOH 8,7N, et l'électrode positive est une électrode d'hydroxyde de nickel utilisée dans les accumulateurs nickel-cadmium.

Cette électrode est testée dans les conditions suivantes:
* décharge à un courant de 60mA par gramme d'alliage hydrurable, avec arrêt à une tension de 0,9V;
* charge à un courant de 30mA par gramme d'alliage hydrurable pendant 16 heures.

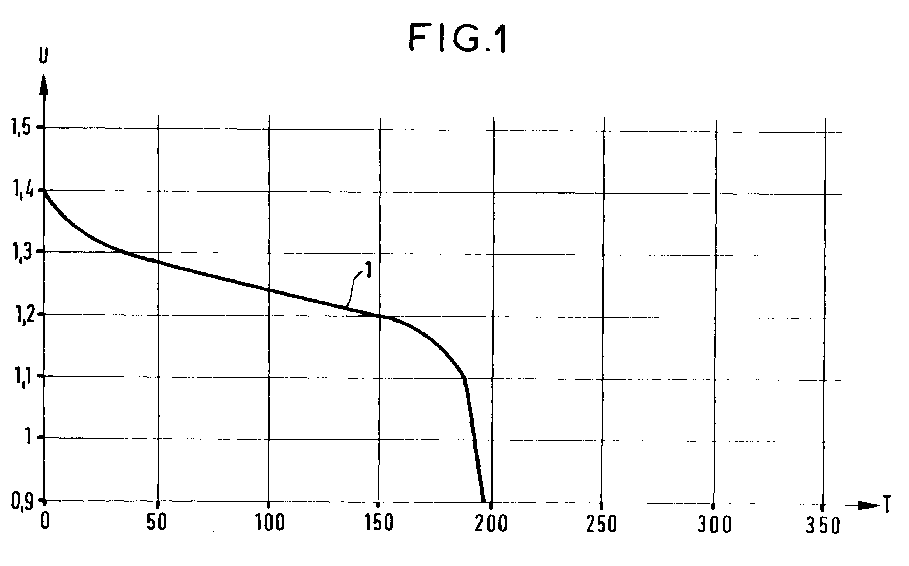

La courbe de décharge 1 est donnée par la figure 1 dans laquelle U est la tension en volts, et T la durée de la décharge en minutes.

Dans ces conditions, cette électrode restitue à la troisième décharge une capacité de 200mAh par gramme d'alliage hydrurable.

### EXEMPLE 2 Alliage Zr ( Ni_{0,4} Mn_{0,4} Al_{0,125} Co_{0,075} )₂

Une électrode est fabriquée et testée comme dans l'exemple 1, mais en utilisant l'alliage selon l'invention Zr ( Ni_{0,4} Mn_{0,4} Al_{0,125} Co _{0,075} )₂.

Ce composé est aussi une phase de Laves de type C14.

La capacité restituée au troisième cycle est de 290mAh par gramme d'alliage hydrurable.

### EXEMPLE 3 Alliage Zr_{0,7} Ti_{0,3} ( Ni_{0,4} Mn_{0,4} Al_{0,125} Co_{0,075} )₂

Une électrode est fabriquée et testée comme dans l'exemple 1, mais en utilisant l'alliage selon l'invention Zr_{0,7} Ti_{0,3} ( Ni_{0,4} Mn_{0,4} Al_{0,125} Co_{0,075} )₂.

Ce composé cristallise lui aussi dans une structure de phases de Laves type C14 dont les paramètres sont a=4,984Å et c=8,117Å.

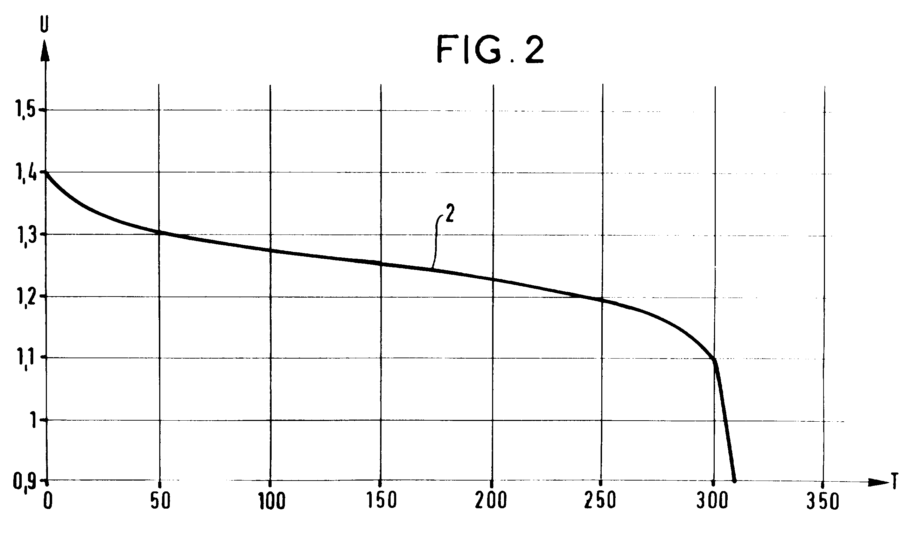

La figure 2 montre la courbe de décharge 2 de l'électrode contenant cet alliage (U est la tension en volts, et T la durée de la décharge en minutes). La capacité restituée au troisième cycle est de 310mAh par gramme d'alliage hydrurable.

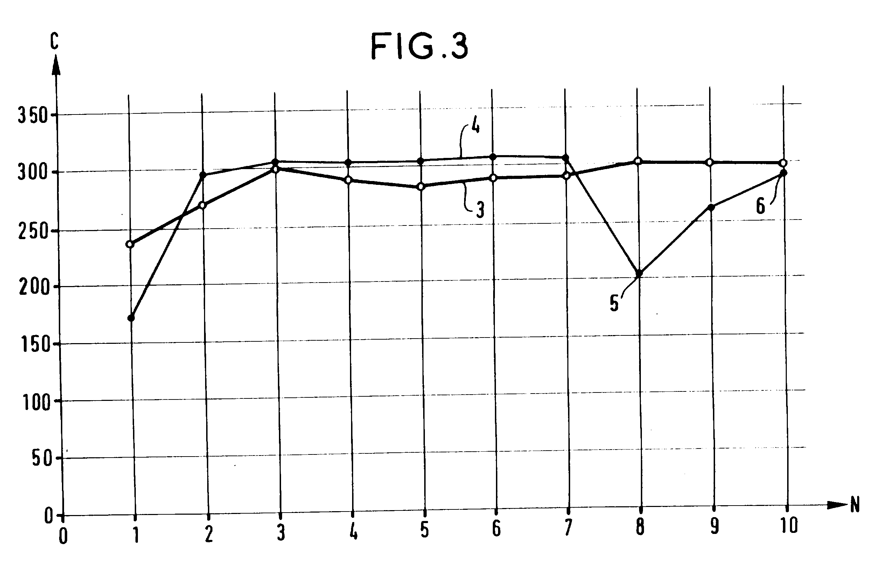

La figure 3 représente les capacités déchargées à un courant de 60mA par gramme d'alliage hydrurable, repérées 3 et 4, mesurées au cours du cyclage de deux électrodes selon l'invention, contenant l'alliage hydrurable Zr_{0,7} Ti_{0,3} ( Ni_{0,4} Mn_{0,4} Al_{0,125} Co_{0,075} )₂. Sur cette figure, C représente la capacité en mAh par gramme d'alliage hydrurable, et N est le nombre de cycle. Le test a été effectué dans des conditions identiques à celles décrites dans l'exemple 1 pour l'électrode de la courbe 4. Pour l'électrode de la courbe 3, la décharge principale (à 60 mA par gramme d'alliage) est suivie d'une décharge résiduelle à 30mA par gramme d'alliage hydrurable (soit C/10) jusqu'à 0,9V; ceci entraîne une légère dégradation de l'électrode qui explique des performances faiblement inférieures à l'autre électrode.

Au 8^{ème} cycle, on observe pour l'électrode de la courbe 4 une baisse de capacité 5 consécutive à une inversion d'une durée de 25 minutes. Dès le 10^{ème} cycle, l'électrode a récupéré sa capacité 6.

### EXEMPLE 4 Alliage Zr ( Ni_{0,4} Mn_{0,35} Al_{0,125} Co_{0,075} Cr_{0,05} )₂

Une électrode est fabriquée et testée comme dans l'exemple 1, mais en utilisant l'alliage selon l'invention Zr ( Ni_{0,4} Mn_{0,35} Al_{0,125} Co_{0,075} Cr_{0,05} )₂.

La capacité restituée au troisième cycle est de 300mAh par gramme d'alliage hydrurable.

### EXEMPLE 5 Alliage Zr_{0,95} Y_{0,05} ( Ni_{0,4} Mn_{0,4} Al_{0,125} Co_{0,075} )₂

Une électrode est fabriquée et testée comme dans l'exemple 1, mais en utilisant l'alliage selon l'invention Zr_{0,95} Y_{0,05} ( Ni_{0,4} Mn_{0,4} Al_{0,125} Co_{0,075} )₂.

La capacité restituée au troisième cycle est de 380mAh par gramme d'alliage hydrurable.

Bien entendu la présente invention n'est pas limitée aux modes de réalisation décrits, mais elle est susceptible de nombreuses variantes sans que l'on ne s'écarte de l'esprit de l'invention.

## Revendications

1. Matériau hydrurable pour électrode négative d'accumulateur nickel-hydrure composé majoritairement d'une phase de Laves de type hexagonal C14 (MgZn2), caractérisé par la formule générale:
( Zr₁₋ₐ Aₐ ) ( Ni_{1-(b+c+d+e)} Mn_{b} Al_{c} Co_{d} Mₑ )ₜ
avec
| | |
|---|---|
| 1,9 ≤ t ≤ 2,1 | 0 < b ≤ 0,6 |
| 0 ≤ a ≤ 0,3 | 0 < c ≤ 0,4 |
| b+c+d+e ≤ 0,8 | 0 ≤ d ≤ 0,4 |
| | 0 < e ≤ 0,6 |
où A représente au moins un élément parmi Ti, Y, Ce, Ca, Mg, et M est choisi parmi Cr et Si.

2. Matériau hydrurable selon la revendication 1, caractérisé en ce que, dans ladite formule générale, 0,4 ≤ b ≤ 0,6.

3. Matériau hydrurable selon l'une des revendications 1 et 2, caractérisé en ce que, dans ladite formule générale, 0 < c ≤ 0,2.

4. Matériau hydrurable selon l'une des revendications précédentes, caractérisé en ce que, dans ladite formule générale, 0 < d ≤ 0,2.

5. Matériau hydrurable selon la revendication 1, caractérisé en ce que, dans ladite formule générale, 0,4 ≤ e ≤ 0,6.

6. Matériau hydrurable selon l'une des revendications précédentes, caractérisé en ce que, dans ladite formule générale, 0,5 ≤ b+c+d+e ≤ 0,8.

7. Matériau hydrurable selon l'une des revendications précédentes, caractérisé en ce que, dans ladite formule générale, 0,01 ≤ a ≤ 0,15 si A représente Y.

8. Matériau hydrurable selon l'une des revendications précédentes, caractérisé en ce que, dans ladite formule générale, 0,01 ≤ a ≤ 0,15 si A représente Ce.

9. Matériau hydrurable selon l'une des revendications précédentes, caractérisé en ce que, dans ladite formule générale, 0,01 ≤ a ≤ 0,06 si A représente Ca.

10. Matériau hydrurable selon l'une des revendications précédentes, caractérisé en ce que, dans ladite formule générale, 0,01 ≤ a ≤ 0,10 si A représente Mg.

11. Matériau hydrurable selon l'une des revendications précédentes, caractérisé en ce que, dans ladite formule générale, c+d+e < 0,3.

12. Matériau hydrurable selon l'une des revendications précédentes, caractérisé en ce que, dans ladite formule générale, b+c+e < 0,7.

13. Electrode négative d'accumulateur nickel-hydrure comportant un matériau hydrurable selon l'une des revendications précédentes caractérisée en ce qu'elle est réalisée à partir d'un mélange composé dudit matériau hydrurable en poudre, de 0,1 à 10% d'une poudre conductrice, et de 0,05 à 5% de liant organique, fixé sur un support conducteur.

## Claims

1. A hydridable material for the negative electrode of a nickel-hydride storage cell mainly comprising a Laves phase of the C14 hexagonal type (MgZn₂), characterized by the general formula:
(Zr₁₋ₐAₐ) (Ni_{1-(b+c+d+e)}Mn_{b}Al_{c}Co_{d}Mₑ)ₜ
where:
| | |
|---|---|
| 1.9 ≤ t ≤ 2.1 | 0 < b ≤ 0.6 |
| 0 ≤ a ≤ 0.3 | 0 < c ≤ 0.4 |
| b+c+d+e ≤0.8 | 0 < d ≤ 0.4 |
| | 0 ≤ e ≤ 0.6 |
where A represents at least one element from Ti, Y, Ce, Ca, and Mg, and where M is chosen from Cr and Si.

2. A hydridable material according to claim 1, characterized in that, in said general formula, 0.4 ≤ b ≤ 0.6.

3. A hydridable material according to claim 1 or 2, characterized in that, in said general formula, 0 < c ≤ 0.2.

4. A hydridable material according to any preceding claim, characterized in that, in said general formula, 0 < d ≤ 0.2.

5. A hydridable material according to claim 1, characterized in that, in said general formula, 0.4 ≤ e ≤ 0.6.

6. A hydridable material according to any preceding claim, characterized in that, in said general formula, 0.5 ≤ b+c+d+e ≤ 0.8.

7. A hydridable material according to any preceding claim, characterized in that, in said general formula, when A represents Y, 0.01 ≤ a ≤ 0.15.

8. A hydridable material according to any preceding claim, characterized in that, in said general formula, when A represents Ce, 0.01 ≤ a ≤ 0.15.

9. A hydridable material according to any preceding claim, characterized in that, in said general formula, when A represents Ca, 0.01 ≤ a ≤ 0.06.

10. A hydridable material according to any preceding claim, characterized in that, in said general formula, when A represents Mg, 0.01 ≤ a ≤ 0.10.

11. A hydridable material according to any preceding claim, characterized in that, in said general formula, c+d+e < 0.3.

12. A hydridable material according to any preceding claim, characterized in that, in said general formula, b+c+e < 0.7.

13. A negative electrode for a nickel-hydride storage cell, said electrode containing a hydridable material according to any preceding claim, and said electrode being characterized in that it is made from a mixture composed firstly of said hydridable material in powder form, secondly 0.1% to 10% of a conductive powder, and thirdly 0.05% to 5% of organic binder, which mixture is fixed on a conductive support.

## Patentansprüche

1. Hydrierbares Material für eine negative Elektrode eines Nickelhydrid-Akkumulators, das überwiegend aus einer Laves-Phase vom hexagonalen Typ C14 (MgZn₂) besteht, gekennzeichnet durch die allgemeine Formel
(Zr₁₋ₐAₐ) (Ni_{1-(b+c+d+e)}Mn_{b}Al_{c}Co_{d}Mₑ)ₜ
mit
| | |
|---|---|
| 1,9 ≤ t ≤ 2,1 | 0 < b < 0,6 |
| 0 ≤ a ≤ 0,3 | 0 < c ≤ 0,4 |
| b+c+d+e ≤ 0,8 | 0 < d ≤ 0,4 |
| | 0 ≤ e ≤ 0,6 |
wobei A mindestens ein Element aus der Gruppe Ti, Y, Ce, Ca, Mg ist und M aus Cr und Si ausgewählt ist.

2. Hydrierbares Material nach Anspruch 1, dadurch gekennzeichnet, daß in der allgemeinen Formel für b folgender Wert gewählt wird: 0,4 ≤ b ≤ 0,6.

3. Hydrierbares Material nach einem der Ansprüche 1 und 2, dadurch gekennzeichnet, daß in der allgemeinen Formel für c folgender Wert gewählt wird: 0 < c ≤ 0,2.

4. Hydrierbares Material nach einem der vorhergehenden Ansprüche, dadurch gekennzeichnet, daß in der allgemeinen Formel für d folgender Wert gewählt wird: 0 < d ≤ 0,2.

5. Hydrierbares Material nach Anspruch 1, dadurch gekennzeichnet, daß in der allgemeinen Formel für e folgender Wert gewählt wird: 0,4 ≤ e ≤ 0,6.

6. Hydrierbares Material nach einem der vorhergehenden Ansprüche, dadurch gekennzeichnet, daß in der allgemeinen Formel folgende Beziehung gilt: 0,5 ≤ b+c+d+e ≤ 0,8.

7. Hydrierbares Material nach einem der vorhergehenden Ansprüche, dadurch gekennzeichnet, daß in der allgemeinen Formel für a folgender Wert gewählt wird : 0,01 ≤ a ≤ 0,15, wenn A von Yttrium gebildet wird.

8. Hydrierbares Material nach einem der vorhergehenden Ansprüche, dadurch gekennzeichnet, daß in der allgemeinen Formel für a folgender Wert gewählt wird: 0,01 ≤ a ≤ 0,15, wenn A von Cer gebildet wird.

9. Hydrierbares Material nach einem der vorhergehenden Ansprüche, dadurch gekennzeichnet, daß in der allgemeinen Formel für a folgender Wert gewählt wird: 0,01 ≤ a ≤ 0,06, wenn A von Kalzium gebildet wird.

10. Hydrierbares Material nach einem der vorhergehenden Ansprüche, dadurch gekennzeichnet, daß in der allgemeinen Formel für a folgender Wert gewählt wird: 0,01 ≤ a ≤ 0,10, wenn A von Magnesium gebildet wird.

11. Hydrierbares Material nach einem der vorhergehenden Ansprüche, dadurch gekennzeichnet, daß in der allgemeinen Formel folgende Beziehung gilt: c+d+e < 0,3.

12. Hydrierbares Material nach einem der vorhergehenden Ansprüche, dadurch gekennzeichnet, daß in der allgemeinen Formel folgende Beziehung gilt: b+c+e < 0,7.

13. Negative Elektrode für einen Nickelhydrid-Akkumulator mit einem hydrierbaren Material nach einem der vorhergehenden Ansprüche, dadurch gekennzeichnet, daß sie aus einer Mischung gebildet wird, die aus dem hydrierbaren Material in Pulverform, aus 0,1 und 10% eines leitfähigen Pulvers und aus 0,05 und 5% eines organischen Bindemittels besteht und auf einem leitenden Träger fixiert ist.
